(19) Europäisches Patentamt
European Patent Office
Office européen des brevets

(11) Veröffentlichungsnummer: **0 082 408**
**B1**

(12) # EUROPÄISCHE PATENTSCHRIFT

(45) Veröffentlichungstag der Patentschrift: **21.05.86**

(51) Int. Cl.⁴: **C 08 F 2/24**

(21) Anmeldenummer: **82111347.9**

(22) Anmeldetag: **08.12.82**

(54) **Verfahren zur Herstellung von salzfreien Polymerfestprodukten aus Emulsionspolymerisaten.**

(30) Priorität: **17.12.81 DE 3149941**

(43) Veröffentlichungstag der Anmeldung: **29.06.83 Patentblatt 83/26**

(45) Bekanntmachung des Hinweises auf die Patenterteilung: **21.05.86 Patentblatt 86/21**

(84) Benannte Vertragsstaaten: **DE FR GB IT NL**

(56) Entgegenhaltungen:
**DE-A-1 620 903**
**GB-A-969 714**
**US-A-2 941 971**

(73) Patentinhaber: **Röhm GmbH, Kirschenallee Postfach 4242, D-6100 Darmstadt 1 (DE)**

(72) Erfinder: **Siol, Werner, Dr. Dipl.-Chem., Gördeler Weg 34, D-6100 Darmstadt 13 (DE)**
Erfinder: **Rauch, Hubert, Odenwaldstrasse 6, D-6108 Weiterstadt 1 (DE)**
Erfinder: **Fleck, Günter, Aumühlenweg 12, D-6100 Darmstadt-Arheilgen (DE)**

**EP 0 082 408 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Von allen Polymerisationsmethoden kommt der Emulsionspolymerisation eine besondere Bedeutung zu. Die Methode eignet sich zur Polymerisation nicht oder nur partiell löslicher Monomerer wie z.B. Styrol, Isopren, Butadien, halogenierte Diene, Acrylnitril, Vinylchlorid, Ester der Acryl- und der Methacrylsäure, Vinylester gegebenenfalls in Copolymerisation, die im Wasser in Form feinverteilter Tröpfchen vorliegen. Die Verteilung des Monomeren erfolgt mit Hilfe geeigneter Emulgatoren, die im allgemeinen zur Klasse der anionenaktiven (z.B. Alkalisalzen von Fettsäuren, Alkyl-, Aryl- bzw. Alkylaryl-Sulfonate, Alkylarylsulfonsäure, Salze und deren Kondensationsprodukte mit Formaldehyd, Sulfobernsteinsäureester usw.) kationenaktiven (z.B. Amin- und quartäre Ammoniumsalze, Esteramine) oder nichtionogenen Emulgatoren (z.B. Addukte von Ethylenoxid an Alkylphenole) gehören. Die Polymerisation findet in der Folge in den gebildeten Mizellen statt, die bei Fortgang der Polymerisation zu Latexteilchen aufquellen.

Die Emulgatorkonzentration soll dabei in der Regel bei 0,05 bis 5 Gew.-%, bezogen auf die Monomeren, liegen.

Als Initiatoren verwendet man überwiegend wasserlösliche Verbindungen (z.B. Perverbindungen, wie Peroxide und Hydroperoxide, Kaliumperoxodisulfat, Redoxinitiatoren), im allgemeinen in Anteilen von 0,01 bis 2 Gew.-%, bezogen auf die Monomeren.

Darüber hinaus können den Polymerisationsansätzen noch Regler (z.B. Schwefelregler wie 2-Ethylhexylthioglykolat) zur Regelung des Molekulargewichts zugesetzt werden.

Die Polymerisation kann schließlich noch mit Hilfe von Abstoppern (z.B. wasserlöslichen Reduktionsmitteln) abgestoppt werden. Aus diesen Dispersionen kann die Polymerisatsubstanz durch Sprühtrocknung, Gefriertrocknung oder durch Ausfällen gewonnen werden. Meistens handelt es sich bei dem Verfahren der Ausfällung um mit Hilfe anionischer Emulgatoren gewonnene Latices.

Vor der Koagulation und der anschließenden Trocknung können bei Bedarf den Polymerisationsansätzen noch geeignete Stabilisatoren zugesetzt werden.

Am häufigsten wird die Ausfällung (Koagulation) der Latices mit Hilfe von Elektrolyten vorgenommen. Genannt seien z.B. Schwefelsäure und ihre Salze wie z.B. Aluminiumsulfat und Natriumsulfat oder Salze der Salzsäure wie z.B. Calciumchlorid, Natriumchlorid usw.

Der erforderliche Zusatz von Elektrolyten ist in der Regel beträchtlich, beispielsweise in der Größenordnung von 0,5 bis 10 Gew.-%, bezogen auf den Polymerisatfeststoff.

An den Fällungsvorgang schließt sich in der Regel ein Waschprozeß an, der die beim Fällen eingeschlossenen Salze, sei es die zur Koagulation selbst zugesetzten, sei es die aus Schwefelsäure und dem Salz einer eingesetzten Emulgatorsäure gebildeten (z.B. das aus Natriumstearat und Schwefelsäure gebildete Natriumsulfat) entfernen soll.

Im allgemeinen gelingt das Herauslösen der Salze jedoch nicht vollständig. Daher besitzen Polymerisate, die aus Dispersionen durch Fällung mit Elektrolyten gewonnen werden, zumeist schlechtere optische und elektrische Eigenschaften als Substanzpolymerisate der gleichen Monomerenzusammensetzung. Außerdem weisen sie in der Regel ein höheres Wasseraufnahmevermögen auf.

Um ein möglichst elektrolytarmes Polymerprodukt zu erhalten, hat man auch die Fällung mit Alkoholen untersucht. Optimale Wirkung beim Fällen weisen Alkohole mit 5 bis 6 Kohlenstoffatomen auf. Eine Belastung des Verfahrens bedeutet jedoch der meist vorhandene Zwang, den in verhältnismäßig großen Mengen anzuwendenden Alkohol wiederzugewinnen. So benötigt man beispielsweise für eine einwandfreie Fällung des Polyvinylchlorids ca. 10 Gew.-% Amylalkohol. Außerdem muß zur Vervollständigung der Fällung auf 100°C erwärmt werden. Es bestand daher die Aufgabe ein Verfahren zur Fällung von Polymerisaten aus Dispersionen zu finden, bei dem der Zwang zum nachträglichen Auswaschen der Elektrolyten vermieden wird und bei dem im übrigen die bekannten und bewährten Verfahrensabläufe und Verfahrensparameter möglichst beibehalten werden konnten.

Es wurde nun gefunden, daß sich Polymerdispersionen außerordentlich einfach zu völlig salzfreien Polymerisaten ausfällen lassen, wenn man zur Herstellung der Dispersion eine freie Säure mit Emulgatorwirkung (Emulgatorsäure) mit einem pKa zwischen 1,0 und 4,5 verwendet und die Polymerisation in Abwesenheit starker Säuren durchführt und die erhaltenen Polymerdispersionen durch Zusatz relativ geringer Mengen einer starken Säure fällt.

Aus der Fällung erhält man im allgemeinen ein völlig klares, d.h. im wesentlichen polymerisatfreies Serum.

Die erfindungsgemäß bei der zur Herstellung der Dispersionen zu verwendenden Säuren mit Emulgatorwirkung entsprechen in ihrem Aufbau dem Bauprinzip der oberflächenaktiven Verbindungen, d.h. sie besitzen einen lipophilen, neben dem hydrophilen Molekülteil, der durch die Säure gebildet wird. Weiter sollen die Säuren den angegebenen pKa-Grenzen (pKa 1,0 - 4,5) genügen.

Die erfindungsgemäß zu verwendenden Säuren besitzen auch in Form der freien Säure noch Tensidcharakter. Unter den genannten Gesichtspunkten fallen z.B. langkettige Carbonsäuren ohne aktivierende Gruppen nicht in die erfindungsgemäß zu verwendende Klasse von Emulgatoren. Weiter sollen diese Säuren bereits durch relativ geringe Mengen, am besten äquimolare Mengen einer stärkeren Säure in die undissociierte Form überführbar sein.

Sehr starke Emulgatorsäuren, wie z.B. langkettige Sulfonsäuren, genügen dieser Bedingung nicht.

Zu den erfindungsgemäß verwendbaren Emulgatorsäuren gehören aktivierte Carbonsäuren, z.B. Alkylmalonsäuren und -bernsteinsäuren bzw. Alkantricarbonsäuren der Formeln IA und IB:

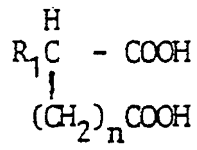 IA

worin $R_1$ für einen Alkylrest mit 8 bis 22, vorzugsweise bis 18 Kohlenstoffatomen und n für null oder 1 steht,

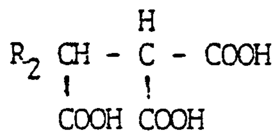 IB

worin $R_2$ für einen Alkylrest mit 6 bis 22, vorzugsweise bis 18 Kohlenstoffatomen steht, fluorierte Carbonsäuren der allgemeinen Formel IC

$R_3$ - COOH IC ;

worin $R_3$ einen mindestens teilweise fluorierten Alkylrest mit 5 bis 20 Kohlenstoffatomen bedeutet, oder freie Säuren langkettig substituierter Aminosäuren z.B. der Formel ID

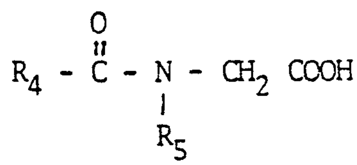 ID

Worin $R_4$ für einen Alkylrest mit 1 bis 20 Kohlenstoffatomen und $R_5$ für Wasserstoff oder Alkyl (mit 1 bis 20 Kohlenstoffatomen) steht, mit der Maßgabe, daß die Summe der C-Atome von $R_4$ und $R_5$ $>$ 6 und $<$ 22 ist, oder freie langkettige Oxo-Carbonsäuren der Formel IE

$R_6$ - O - $CHR_7$ - COOH IE

worin $R_6$ für einen Alkylrest mit 1 bis 20 Kohlenstoffatomen steht und $R_7$ für Wasserstoff oder einen Alkylrest mit 1 bis 18 Kohlenstoffatomen steht, mit der Maßgabe, daß die Summe der Kohlenstoffatome aus $R_6$ und $R_7$ $>$ 6 und $<$22 ist.

Ferner (komplexe) Säuren von Organophosphorverbindungen mit langkettigen Alkylresten im Molekül, insbesondere saure Phosphorsäureester, Phosphorigsäureester und Phosphonsäuren (Verbindungen der allgemeinen Formel II).

Genannt seien Phosphorsäuremonoester oder Phosphorsäurediester der allgemeinen Formel IIA

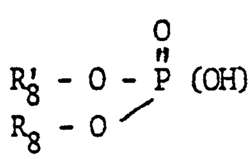 IIA.

worin $R_8$ für einen Alkylrest mit 6 bis 20 Kohlenstoffatomen oder einen mit $C_2$ bis $C_{22}$-Alkyl substituierten Arylrest, insbesondere einen Phenylrest oder ein oxyäthyliertes Alkylphenol mit 4 bis 16 Kohlenstoffatomen im Alkylrest aus der Umsetzung mit 1 bis 10 Ethylenoxideinheiten und $R_8'$ für Wasserstoff (= Phosporsäuremonoester) oder für einen Alkylrest mit 1 - 20 Kohlenstoffatomen steht oder worin $R'_8$ auch die übrigen für $R_8$ genannten Bedeutungen besitzen kann. Ferner seien genannt: Phosphorsäureester von Glykolen und Glyceriden, beispielsweise der Formel IIB

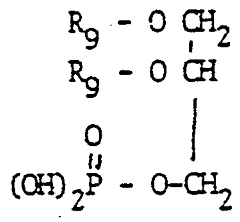

IIB

worin $R_9$ für Wasserstoff oder einen Alkylrest mit 1 bis 20 Kohlenstoffatomen oder einen Rest $R_{10}$ COO-, worin $R_{10}$ für einen Alkylrest mit 1 bis 20 Kohlenstoffatomen steht, mit der Maßgabe, daß ein Alkylrest mit 8 oder mehr Kohlenstoffatomen im Molekül sein soll oder komplexe Phosphate der Formel IIC

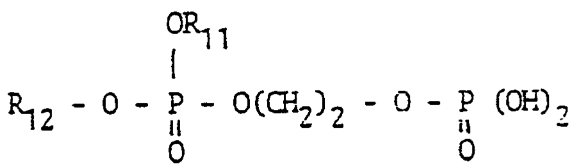

IIC

worin $R_{11}$ für einen Alkylrest mit 8 - 20 Kohlenstoffatomen und $R_{12}$ für einen Alkylrest mit 1 - 20 Kohlenstoffatomen steht.

Besonders genannt seien z.B. freie Säuren komplexer Phosphorsäureester wie phosphatiertes Nonylphenol, das mit 5 Mol Ethylenoxid umgesetzt wurde, perlfluorierte Carbonsäuren, freie Säuren langekettiger Sarkoside und Glycide, Alkylmalonsäuren, 2-Oxo-carbonsäuren, wie z.B. 2-Oxo-Laurinsäure.

Im allgemeinen liegt der Zusatz der freien Emulgatorsäuren, z.B. der Säuren der Formeln I und II bei 0,01 bis 2 Gew.-%, vorzugsweise bei 0,05 bis 1 Gew.-%, bezogen auf den Polymerisatfeststoff.

Dem erfindungsgemäßen Verfahren zugänglich sind allgemein radikalisch polymerisationsfähige Vinylverbindungen (z.B. die in Ullmanns Encyklopädie der Techn. Chemie, 3. Auflage, Bd. 14, Urban & Szhwarzenberg 1963, S. 108/ 109 aufgeführten Monomeren), vorausgesetzt, daß die resultierenden Polymerisate bzw. Copolymerisate keinen erheblich hydrophilen Charakter bekommen. So wirkt z.B. limitierend die Verwendung von Acryl- bzw. Methacrylsäure oder anderer Säuren sowie die Verwendung basischer Monomerer. Als limitierender Richtwert sei etwa ein Gehalt von ca. 10 Gew.-% (im allgemeinen $< 5$ Gew.-%) an einer polymerisationsfähigen Säure (Acryl-/Methacrylsäure) genannt.

Als den erfindungsgemäßen Verfahren zugänglich seien erwähnt: Vinylmonomere, wie Ester, Säuren, Amide und Nitrile der Acryl- und/oder der Methacrylsäure (inclusive der in der Ester- oder Amidgruppe durch funktionale Reste, wie Hydroxy-, oder nicht- bzw. nur schwachbasische heterocyclische Funktionen substituierter Monomeren und andere hydrophile Monomere wie die Monoester von Polyolen), Styrol und seine Abkömmlinge wie α-Methylstyrol oder Vinyltoluol, polymerisationsfähige Diene, wie Isopren, Butadien sowie halogenierte Derivate, die Ester polymerisationsfähiger Dicarbonsäure, wie Malein- und Fumarsäureester.

Besonders genannt seien die Emulsionspolymerisate bzw. Copolymerisate auf Basis der Methyl-, Äthyl-, n-Propyl-, iso-Propyl-, n-Butyl-, iso-Butyl- und Amyl-, 2-Äthylhexylester der Acrylsäure und/oder der Methacrylsäure [vgl. Houben-Weyl-Müller, 4. Auflage, BD. XIV/1, S. 1048 (1961)] sowie Acrylnitril und Methacrylnitril. Ferner die Copolymerisate der genannten Monnomeren mit Styrol und/oder α-Methylstyrol in untergeordneten Mengen, beispielsweise von 0 bis 40 Gew.-%, bezogen auf die Gesamtheit der Monomeren. Weiter können als Comonomere, die im allgemeinen in Anteilen von 0 bis 20 Gew.-%, insbesondere von 0 bis 8 Gew.-%, bezogen auf die Gesamtheit der Monomeren, copolymerisiert werden:

Acrylamid, Methacrylamid, N-alkylsubstituierte (Meth)acrylamide (wobei unter Alkylsubstituenten im allgemeinen solche mit $C_1$-$C_6$ verstanden werden sollen), weiter die durch funktionale Reste substituierten Comonomeren, die durch Hydroxygruppen substituierten Alkylester und Alkylamide der Acryl- und/oder der

Methacrylsäure, desweiteren N-Methylol- und Methylolätherverbindungen der Methacrylamide und Acrylamide sowie oxirangruppenhaltige Ester der (Meth)acrylsäure, wie z.B. Glycidylester.

Schließlich können die erfindungsgemäß herzustellenden Emulsionspolymerisate noch vernetzende Monomere enthalten, wobei deren Anteil im allgemeinen unter 10 Gew.-%, in der Regel zwischen 0,1 und 2 Gew.-%, bezogen auf die Gesamtheit der Monomeren, liegen.

Es können die an sich bekannten vernetzenden Monomeren wie z.B. Polyvinylbindungen, z.B. Di- oder Triester der Acryl- und/oder der Methacrylsäure mit Di- oder Triolen, wie beispielsweise Äthylenglykoldimethacrylat und -acrylat, Propantrioltriacrylat, 1,3- und 1,4-Butandiol-dimethacrylate und -methacrylate; ferner pfropfvernetzende Monomere wie Allylmethacrylat und -acrylat, Vinyloxyester der Methacrylsäure und Acrylsäure sowie Vernetzer des Typs Trisvinylcyclohexan.

Die an sich bekannten Techniken der Emulsionspolymerisation können auch auf das vorliegende Verfahren angewendet werden (vgl. Houben-Weyl, Methoden der Organischen Chemie, Band I4/Teil 1), wobei der Polymerisationsansatz erfindungsgemäß die vorstehend definierten Emulgatorsäuren enthält. Im allgemeinen wird der Polymerisationsgrad der zu fällenden Polymerisate zwischen 100 und 10 000 liegen. Der mittlere Teilchenradius der Latex-Partikel liegt in der Regel zwischen 20 und 2000 nm, speziell zwischen 40 und 1500 nm. Der Feststoffgehalt der Dispersionen kann innerhalb gewisser Grenzen schwanken; er kann z.B. zwischen 10 und 60 Gew.-% liegen. Die Viskosität der Dispersionen liegt - in Abhängigkeit von Konzentration und Polymerisationsgrad - in der Regel zwischen 1 und 10 000 mPa.sec.

Die Reaktionsführung kann im Einfach- oder Mehrfach-Batch-Verfahren, vorzugsweise jedoch im Monomer- bzw. Emulsionszulaufverfahren erfolgen. Vorzugsweise wird die Polymerisation mit Initiatoren der an sich bekannten Art ausgelöst, wobei salzfreie bzw. im Verlauf der späteren Operationen nicht-salzbildende Initiatoren bevorzugt sind. Als Initiatoren seien insbesondere Perverbindungen, wie Peroxide oder Persäuren, Azoverbindungen sowie Redoxsysteme genannt (vgl. Brandrup-Immergut, Polymer-Handbook, Interscience).

Bewährt haben sich insbesondere Peroxide wie $H_2O_2$, salzfreie Redoxsysteme aus Peroxiden und Mercaptanen, Peroxosäuren, wie die Peroxodiphosphorsäure, Azoverbindungen, wie 2,2'-Azo-bis(isobutyronitril), 4,4'-Azobis-(4-cyano-valeriansäure) u.a.

Der Gehalt an Initiator liegt in der Regel bei 0,005 bis 1 Gew-%, vorzugsweise bei 0,02 bis 0,5 Gew-%, bezogen auf die Monomeren.

Die Emulgatorsäure wird wie bei Emulgatoren üblich zugegeben.

Die Polymerisationstemperatur liegt in dem für einschlägige Polymerisationsverfahren unter Verwendung der genannten Initiatoren üblichen Bereich, beispielsweise im Bereich von 20 bis 120° C, vorzugsweise zwischen 40 und 95° C. Gegebenenfalls ist dabei unter Druck zu polymerisieren. Die Polymerisationsdauer liegt in der Regel bei 1 bis 10 Stunden, wobei an die Zugabephase in der Regel efne Endpolymerisationsphase in der Größenordnung der halben bis der doppelten Zugabedauer angeschlossen wird. Nach Abschluß des Polymerisationsvorgangs kann die Koagulation bzw. Ausfällung des Polymerisats vorgenommen werden.

Gegebenenfalls ist vor der Koagulation auf einen Feststoffgehalt von 10 bis 30 Gew.-% zu verdünnen. Die Koagulation bzw. Ausfällung wird durch Zusatz starker Säuren bewirkt. Als starke Säuren kommen beispielsweise anorganische Säuren, wie Schwefelsäure, Salzsäure, Perchlorsäure, z.B. in zweckmäßiger Verdünnung in Frage. Als Richtwert seien z.B. 1 %ige Lösungen der Säuren angeführt. Weiter sind wäßrige Lösungen organischer Säuren, vorzugsweise von Carbonsäuren, die aktivierende Einheiten besitzen, anwendbar. Im allgemeinen sollte der pKa (der ersten Dissoziationsstufe) dieser Säuren zwischen 0 und 2,5 liegen. Genannt seien die Oxalsäure ($pK_1 = 1,23$), Maleinsäure ($pK_1 = 1,83$), Dihydroximalonsäure ($pK_1 = 1,92$), Cyanessigsäure ($pK = 2,45$), Trichloressigsäure ($pK = 0,70$). Es versteht sich, daß die zur Dispersionsfällung eingesetzten Säuren keine Alkylketten mit einer Kohlenstoffzahl $> 4$ aufweisen dürfen, d.h. nicht selbst als Tenside wirksam sein dürfen.

Im allgemeinen genügen geringe Mengen der starken Säuren zur Ausfällung, beispielsweise 0,02 bis 2 Gew.-% der Säure, bezogen auf den Polymerisatfeststoff. Die Fällung kann beispielsweise so durchgeführt werden, daß man den u.U. zuvor verdünnten Polymerisationsansatz kontinuierlich oder in Portionen und unter Rühren zu der Lösung der starken Säure zugibt, wobei diese vorzugsweise auf eine Temperatur oberhalb Raumtemperatur, beispielsweise auf 70 - 95° C erwärmt wurde. Daneben ist es auch möglich, die Lösung der starken Säure der zu fällenden Dispersion in der Kälte zuzusetzen und dann erst zu erhitzen.

Es empfiehlt sich ein Nachrühren bei erhöhter Temperatur, über einen gewissen Zeitraum, etwa bis zu zwei Stunden, vorzugsweise ca. eine halbe Stunde. Die Temperatur beim Fällvorgang oder beim Nacherhitzen ist abhängig von der Polymerisathärte. So kann beispielsweise ein Polymerisat mit einer Glastemperatur von 80° C schon bei einer Temperatur von 60° C zu gut handhabbaren Teilchen agglomeriert werden, während ein Material wie PMMA mit einer Glastemperatur von 105° C im Falle einer Fällung bei 60° C nur lose zusammenhängende Agglomerisate ergibt, das im getrockneten Zustand sehr stark staubt. In diesem Falle empfiehlt sich eine Fällung bzw. ein Nacherhitzen des gefällten Materials bei möglichst hoher Temperatur z.B. 95° C.

Die gefällten Polymerprodukte zeichnen sich im allgemeinen durch einen hohen Feststoffgehalt (von ca. 45 % an aufwärts) aus.

Das erfindungsgemäße Verfahren muß vor allem da auf Interesse stoßen, wo es auf hohe Reinheit der Produkte ankommt. Auch bei Dispersionen, die üblicherweise mit niederem Feststoffgehalt anfallen und die daher bei Sprühtrocknung erhebliche Sprühkosten verursachen, empfiehlt sich die Anwendung des Verfahrens besonders. Vorteile entstehen auch bei der Herstellung von PVC-Verarbeitungshilfsmitteln und Plastisolen auf Acrylatbasis. Das erfindungsgemäße Verfahren stellt allgemein eine kostengünstige und umweltfreundliche

Alternative zu den Verfahren des Standes der Technik dar. Hervorzuheben ist die ungewöhnliche hohe Reinheit der erhaltenen Festprodukte.

Die folgenden Beispiele sollen der Erläuterung dienen.

**Beispiel 1 (Dispersionsherstellung)**

In einem Witt'schen Topf, ausgerüstet mit Rührwerk, Thermometer, Rückflußkühler und Tropftrichter, wird eine Lösung von 0,5 g einer Emulgatorsäure, bestehend aus fünffach oxäthyliertem und phosphatiertem Isononylphenol [$i\text{-}C_9H_{19}\text{-}C_6H_4\text{-}O(C_2H_4O)_5\text{-}PO_3H_2$] und 2 g Azo-bis-4-valeriansäure (Na-Salz) in 1700 g $H_2O$ hergestellt und auf 80°C erwärmt. In diese Vorlage wird innerhalb von 3 Std. gleichmäßig eine zuvor aus 5 g des oben genannten Emulgators, 4 g des oben genannten Initiators, 1600 g Methylmethacrylat, 200 g Äthylacrylat und 2500 g $H_2O$ hergestellte Emulsion zudosiert. Anschließend wird noch 2 Std. bei 80°C erwärmt. Nach Abkühlen auf Raumtemperatur resultiert eine gut filtrierbare, niedrigviskose, stabile Dispersion mit einem Feststoffgehalt von 30 % und einem Teilchendurchmesser von 150 nm.

**Beispiel 2 (Dispersionsherstellung)**

In einem Polymerisationsgefäß, wie in Beispiel 1 beschrieben, werden 3,6 g des in Beispiel 1 genannten Emulgators, 2 g des in Beispiel 1 genannten Initiators und 1450 g dest. Wasser vorgelegt und auf 80°C erwärmt. In diese Vorlage wird bei 80°C innerhalb von 4 Std. eine zuvor aus 16 g des oben genannten Emulgators, 2 g des oben genannten Initiators, 1440 g Methylmethacrylat, 960 g Butylmethacrylat und 2200 g dest. $H_2O$ hergestellte Emulsion zudosiert. Anschließend wird 90 Min. bei 80°C erwärmt. Nach Abkühlen auf Raumtemperatur und Filtration erhält man eine extrem feinteilige Dispersion. Feststoffgehalt = 40 %; pH-Wert = 3,2; Viskosität: 10 000 mPa.sec.

**Beispiel 3 (Fällung)**

500 ml 0,5 %ige Schwefelsäure werden vorgelegt und auf 80°C erwärmt. Dazu tropft man innerhalb 15 Min. 500 ml der Dispersion gemäß Beispiel 1, anschließend wird 30 Min. bei 90°C gerührt. Nach Abkühlen und Abnutschen wird noch zweimal mit 500 ml dest. $H_2O$ gewaschen. Es resultiert ein Fällprodukt mit einem Feststoffgehalt von 70 %. Das Waschwasser ist klar. Nach Trocknung bei 30°C erhält man ein feinteiliges, gut rieselfähiges Pulver, das sich klar in organischen Lösungsmitteln, z.B. Methylethylketon, löst.

**Beispiel 4 (Fällung)**

Man verfährt wie in Beispiel 3, führt die Fällung jedoch mit 0,5 %iger Oxalsäure durch.

Man erhält ein Fällprodukt mit 60 % Feststoff. Das Waschwasser ist klar. Auch in diesem Fall erhält man ein gut handhabbares Pulver, das sich in organischen Lösungsmitteln klar auflöst.

**Beispiel 5 (Fällung)**

250 g Dispersion gemäß Beispiel 2 werden mit 250 g dest. $H_2O$ verdünnt. Dazu gibt man bei Raumtemperatur innerhalb von 15 Min. 250 g 0,4 %ige Schwefelsäure. Danach wird 15 Min. bei Raumtemperatur gerührt. Die Ausfällung wird durch Zusatz von 250 ml dest. Wasser verdünnt und danach 30 Min. bei 50°C gerührt. Das so gewonnene Koagulat läßt sich leicht absaugen. Nach zweimaligem Waschen mit je 500 ml dest. $H_2O$ resultiert ein Polymerisatpulver mit einem Feststoffgehalt von > 50 %. Die Trocknung bei Raumtemperatur führt zu einem Pulver, das sich klar in Methylethylketon bzw. Toluol löst.

**Beispiel 6 (Dispersionsherstellung)**

In einem Polymerisationsgefäß, wie in Beispiel 1 beschrieben, wird eine Lösung von 50 g Perhydrol (30 %ges Wasserstoffperoxid) in 1 400 g destilliertem Wasser vorgelegt. Dazu gibt man 1,5 g eines 6-fach oxäthylierten und phosphatierten Isodecanols (bestehend aus ca. 85 % des Monoesters der Phosphorsäure und ca. 15 % des Diesters der Phosphorsäure). Es wird auf 80°C erwärmt. In diese Vorlage werden innerhalb von 4 Stunden 600 g Methylmethacrylat getropft. Nach Zugabe der Hälfte des Methylmethacrylats werden nochmals 25 g Perhydrol (30 %iges Wasserstoffperoxid) zugegeben. Nach Beendigung des Monomerenzulaufs wird noch 3 Stunden bei 80°C gerührt. Nach Abkühlen auf Raumtemperatur und Filtration erhält man eine niedrigviskose, stabile Dispersion mit einem Feststoffgehalt von 29 %.

**Beispiel 7 (Fällung)**

Die Fällung der Dispersion gemäß Beispiel 6 erfolgt wie in Beispiel 2 beschrieben. Es wird jedoch 1 %ige Schwefelsäure verwendet. Nach der Fällung wird noch 2 Stunden bei 90°C gerührt.

Nach Trocknung erhält man ein gut rieselfähiges Pulver, das sich in Methylethylketon klar löst.

**Beispiel 8**

Man wiederholt den Ansatz gemäß Beispiel 1, verwendet jedoch als Emulgator eine perfluorierte $C_9$-Carbonsäure. Nach Fällung gemäß Beispiel 3 resultiert ein in Methylethylketon klar lösliches Pulver.

**Beispiel 9 (Dispersionsherstellung und Fällung)**

In einem Polymerisationsgefäß, wie in Beispiel 1, werden 0,7 g einer Emulgatorsäure, bestehend aus einem fünffach oxäthylierten und phosphatierten Isononylphenol [$i\text{-}C_9H_{19}\text{-}C_6H_4\text{-}O\text{-}(C_2H_4O)_5\text{-}PO_3H_2$], 10 g Perhydrol (= 30 %iges $H_2O_2$) und 1 400 g vollentsalztes Wasser vorgelegt.

Man erwärmt die Vorlage auf 85°C und läßt bei dieser Temperatur innerhalb von 4 Stunden eine Lösung zutropfen, bestehend aus:

4,0 g Azo-bis-isobutyronitril
2,0 g der oben beschriebenen Emulgatorsäure
0,2 g 2-Äthylhexylthioglykolat
120,0 g Äthylacrylat
480,0 g Styrol

Danach wird noch 2 Stunden bei 80°C gerührt, anschließend abgekühlt, filtriert und mit 0,5 %iger

Schwefelsäure gefällt. Die Fällung erfolgt wie in Beispiel 3 beschrieben.

Das trockene Produkt besteht aus weißen, nicht verglasten Pulverkörnchen, die sich in Toluol innerhalb von 10 min klar lösen.

**Beispiel 10 (Dispersionsherstellung und Fällung)**

In einem 4 1-Rundkolben mit Rührwerk, wird eine Mischung aus 720 g Wasser, 1 g einer Emulgatorsäure, bestehend aus fünffach oxäthyliertem und phosphatiertem Isononylphenol [$i-C_9H_{19}-C_6H_4-O(C_2H_4O)_5-PO_3H_2$] und 0,5 g Azo-bisisobutyronitril vorgelegt und unter kräftigem Rühren auf 80°C erwärmt.

In diese Vorlage läß man bei langsamer Rührung innerhalb von 4 Stunden bei 80°C eine Emulsion eintropfen, bestehend aus:

1200 g Methylmethacrylat
1 g 2-Äthylhexylthioglykolat
3,5 g der oben genannten Emulgatorsäure
3,0 g Azo-bis-isobutyronitril
1100 g Wasser.

Nach Beendigung des Zulaufs hält man noch weitere 90 min auf 80°C, kühlt ab, filtriert bei Raumtemperatur und erhält so eine niedrigviskose, gut handhabbare Dispersion mit einem Feststoffgehalt von 39 Gew.-%.

Die Dispersion wird anschließend, wie in Beispiel 7 beschrieben, gefällt. Es resultiert ein Pulver, das sich klar in Methylethylketon löst.

**Patentansprüche**

1. Verfahren zur Herstellung von in wesentlichen salzfreien Polymerfestprodukten aus Emulsionspolymerisaten durch radikalische Polymerisation von Monomeren in Dispersion und Fällung in Gegenwart von Säure,

dadurch gekennzeichnet,

daß man die Monomeren mittels einer freien Säure mit Emulgatorwirkung (Emulgatorsäure), deren pKa in Bereich von 1,0 bis 4,5 liegt, in der wäßrigen Phase dispergiert, die Polymerisation in Abwesenheit starker Säuren durchführt und die erhaltenen Polymerdispersionen durch Zusatz einer ausreichenden Menge einer starken Säure ausfällt.

2. Verfahren gemäß Anspruch 1, dadurch gekennzeichnet, daß die Polymerisation durch salzfreie und im Verlauf des Verfahrens nicht salzbildende Initiatoren ausgelöst wird.

3. Verfahren gemäß den Ansprüchen 1 und 2, dadurch gekennzeichnet, daß die zur Fällung verwendeten Säuren organische Säuren mit einem pKa zwischen 0 und 2,5 oder Mineralsäuren mit einem pKa $< 2,5$ sind.

4. Verfahren gemäß den Ansprüchen 1 bis 3, dadurch gekennzeichnet, daß als Monomeren überwiegend in Wasser schlecht lösliche bis unlösliche Monomere eingesetzt werden.

5. Verfahren gemäß den Ansprüchen 1 bis 4, dadurch gekennzeichnet, daß als Monomere solche vom Methacrylat und/oder Acrylattyp,insbesondere Methacrylsäure- und/oder Acrylsäureester eingesetzt werden.

**Claims**

1. Process for preparing substantially saltfree solid polymer products from emulsion polymers by radical polymerisation of monomers in dispersion and precipitation in the presence of acid, characterised in that the monomers are dispersed in the aqueous phase by means of a free acid with an emulsifying effect (emulsifying acid), the pKa of which is in the range from 1.0 to 4.5, the polymerisation is effected in the absence of strong acids and the polymer dispersions obtained are precipitated by the addition of a sufficient quantity of a strong acid.

2. Process as claimed in claim 1, characterised in that the polymerisation is initiated by saltfree initiators which do not form salts in the course of the process.

3. Process as claimed in claims 1 and 2, characterised in that the acids used for precipitation are organic acids with a pKa of between 0 and 2.5 or inorganic acids with a pKa of less than 2.5.

4. Process as claimed in claims 1 to 3, characterised in that the monomers used are monomers which are predominantly difficultly soluble to insoluble in water.

5. Process as claimed in claims 1 to 4, characterised in that the monomers used are those of the methacrylate and/or acrylate type, particularly the esters of methacrylic and/or acrylic acid.

**Revendications**

1. Procédé pour la préparation de produits solides polymères pratiquement exempts de sels, à partir de produits de polymerisation en émulsion, par polymérisation radicalaire de monomères en dispersion et

précipitation en présence d'un acide, caractérisé en ce qu'on disperse dans la phase aqueuse les monomères au moyen d'un acide libre à action émulsionnante (acide émulsionnant) dont le pKa se situe dans la gamme de 1,0 à 4,5, on conduit la polymérisation en l'absence d'acides forts et on précipite les dispersions de polymères obtenues par addition d'une quantité suffisante d'un acide fort.

2. Procédé selon la revendication 1, caractérisé en ce que la polymérisation est déclenchée par des initiateurs qui sont exempts de sels et qui ne forment pas de sels au cours du procédé.

3. Procédé selon la revendication 1 ou 2, caractérisé en ce que les acides utilisés pour la précipitation sont des acides organiques ayant un pKa compris entre 0 et 2,5 ou des acides minéraux ayant un pKa inférieur à 2,5.

4. Procédé selon l'une quelconque des revendications 1 à 3, caractérisé en ce qu'on utilise de façon prépondérante, comme monomères, des monomères peu solubles à insolubles dans l'eau.

5. Procédé selon l'une quelconque des revendications 1 à 4, caractérisé en ce qu'on utilise, comme monomères, les monomères du type méthacrylate et/ou acrylate, en particulier des esters d'acide méthacrylique et/ou acrylique.